# EUROPEAN PATENT APPLICATION

(11) **EP 3 933 583 A1**
(43) Date of publication of application: **05.01.2022**
(21) Application number: 20183245.8
(22) Date of filing: 30.06.2020
(51) Int. Cl.: G06F 9/50

(54) **METHOD FOR ADJUSTING MACHINE LEARNING MODELS AND SYSTEM FOR ADJUSTING MACHINE LEARNING MODELS**

(71) Applicant: ABB Schweiz AG, 5400 Baden (CH)
(72) Inventor: BIRKE, Robert, 8802 Kilchberg (CH); EIDENBENZ, Raphael, 8049 Zürich (CH); PIGNOLET, Yvonne-Anne, 8005 Zürich (CH); MOGA, Alexandru, 8800 Thalwil (CH); RAMASWAMY, Srini, Blacklick, OH 43004 (US)
(74) Representative: Zimmermann & Partner Patentanwälte mbB

(57) **Abstract**

A method for adjusting machine learning (ML) models in a system comprising a plurality of devices is suggested. The method comprises: - providing a system comprising a plurality of devices, wherein the devices have computational resource capacities; - providing one or more machine learning (ML) tasks; - providing a repository of ML models for the one or more tasks, wherein a plurality of the ML models of a single task solve the same task with different computational resources requirements and different quality metrics; - selecting a device of the plurality of devices of the system to execute a task, wherein the selected device has available computational resource capacities; and - selecting, from the repository of ML models of the task to be executed, one of the ML models, wherein the computational resources requirements of the selected ML model do not exceed the available computational resource capacities of the selected device. Systems configured to perform the methods as disclosed herein are also suggested.

## Description

### Field of the Invention

The present disclosure generally relates to machine learning models used in a system comprising a plurality of devices. Specifically, the disclosure relates to fog computing networks, and in particular, to machine learning models used in fog networks which are implemented on an automation systems.

### Background of the Invention

The emergence of the Internet of Things (loT) is extending the availability of network computing and resources to a wide range of devices and systems that have previously been excluded from data networking environments. Devices that has been working separately from each other and have been programmed manually can now work together and interact with each other. Complex system include a plurality of devices and work together as an automation system which reacts and interacts with its environment.

A goal of doing so is to enable higher levels of automation by enabling machines of various complexity and purposes to communicate without reliance on human intervention and/or interaction through manually programming of machines via interfaces. The majority of devices, sensors, and actuators (the "things") that will be network-enabled in this manner will typically be included in much larger systems providing new forms of automation. Industrial automation systems become "smarter" and fog computing may help to increase engineering efficiency.

Fog computing helps enable these larger systems by moving the computation, networking and storage capabilities of the centralized cloud closer to the machines and devices. Given the projected scale of such systems, the demand for fog node resources is expected to be high.

Previously available cloud solutions (e.g., computing and storage) have a number of drawbacks and limitations that preclude previously available cloud solutions from satisfying the performance demands of loT applications. For example, previously available cloud solutions provide insufficient performance in the areas of: satisfying low latency thresholds; supporting for highly mobile endpoint devices; and providing real-time data analytics and decision making.

Fog computing networks (or fog networks or fog environments) are being developed as a solution to satisfy the performance demands of loT applications. Fog networks provide computing and storage resources closer to the edge of networks, as opposed to the remote and centralized clustering of previously available cloud solutions. Endpoint client devices and near-user endpoint devices of fog networks are configured to collaboratively service client applications at the edge of a network close to the things seeking resources.

An industrial fog environment enables easy deployment of fog applications on spare resources of the networking and compute devices, so-called fog nodes, of an industrial automation system. To ensure that the application components, so-called foglets, have sufficient resources available to fulfill their functions, resources are reserved for them based on declared estimated resource usage model during hardware sizing. Typically, these resource requirement values are overestimated in order to avoid situations of starvation in harsh environments. As a result, resources are underutilized.

Allocation of applications in a fog network need to be calculated based on a model. Usually, application models are manually adapted if the fog network changes or if the application is used on the network for the first time. A fog network enables running distributed applications on the devices of the underlying automation system. One key feature of fog computing is that deployment, updating and removal of applications shall require minimal manual effort.

Computational complexity and quality of a trained Machine Learning (ML) models are usually based on a static algorithm and do not change. Training and inference might work on strong devices, leaving many resources unused, but overloads low- end devices or devices sharing multiple workloads. Due to the heterogeneous distribution of computational resources in systems with a plurality of devices, a ML model may not be efficient.

Accordingly, there is a need to improve ML modelling.

### Brief Summary of the Invention

A method for adjusting machine learning (ML) models in a system comprising a plurality of devices is suggested. The method comprises: - providing a system comprising a plurality of devices, wherein the devices have computational resource capacities; - providing one or more machine learning (ML) tasks; - providing a repository of ML models for the one or more tasks, wherein a plurality of the ML models of a single task solve the same task with different computational resources requirements and different quality metrics; - selecting one or more devices of the plurality of devices of the system to execute a task, wherein the selected one or more devices have available computational resource capacities; - selecting, from the repository of ML models of the task to be executed, one of the ML models, wherein the computational resources requirements of the selected ML model do not exceed the available computational resource capacities of the selected one or more devices; - deploying the selected ML model to the one or more devices; - execute the selected ML model on the one or more devices.

A method for adjusting machine learning (ML) models in a fog network is suggested. The method comprises: - providing a fog network with a plurality of fog nodes, each fog node has computational resource capacities; - providing one or more machine learning (ML) tasks; - providing a repository of ML models for each task, wherein a plurality of the ML models of a single task solve the same task with different computational resources requirements and different quality metrics; - selecting one or more fog nodes of the plurality of fog nodes of the fog network to execute a task, wherein the selected one or more fog nodes have available computational resource capacities; - selecting, from the repository of ML models of the task to be executed, one of the ML models, wherein the computational resources requirements of the ML model do not exceed the available computational resource capacities of the selected one or more fog nodes; - deploying the selected ML model to the one or more fog nodes; - execute the selected ML model on the one or more fog nodes.

Systems configured to perform the methods as disclosed herein are also suggested.

Those skilled in the art will recognise additional features and advantages upon reading the following detailed description, and upon viewing the accompanying drawings.

### Brief Description of the Drawings

Figure 1 illustrates an example of an automation system with a plurality of devices. A fog network is hosted by the devices.
Figure 2 illustrates an example of the method for choosing the ML model according to the present disclosure.
Figure 3 illustrates another example of the method for choosing the ML model according to the present disclosure.

### Detailed Description of the Invention

In the following detailed description, reference is made to the accompanying drawings, which form a part hereof, and in which are shown by way of illustration specific embodiments of the invention.

As used herein, the terms "having", "containing", "including", "comprising" and the like are open ended terms that indicate the presence of stated elements or features, but do not preclude additional elements or features.

It is to be understood that other embodiments may be utilised, and structural or logical changes may be made without departing from the scope of the present invention. The following detailed description, therefore, is not to be taken in a limiting sense, and the scope of the present invention is defined by the appended claims. The embodiments described herein use specific language, which should not be construed as limiting the scope of the appended claims. Each embodiment and each aspect so defined may be combined with any other embodiment or with any other aspect unless clearly indicated to the contrary.

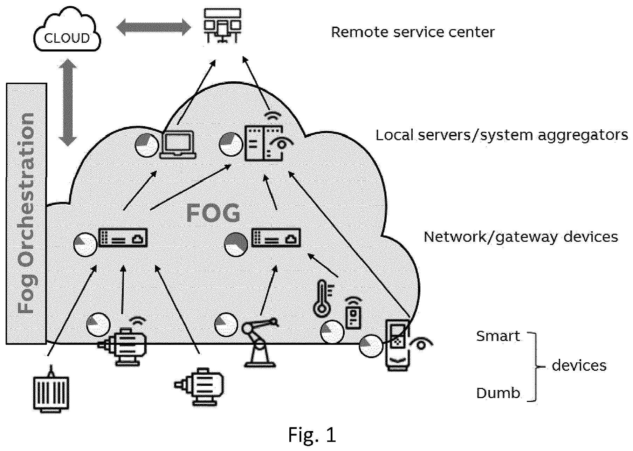

Fig. 1 shows an exemplary embodiment of a distributed control system (DCS) implemented on a plurality of devices. The DCS in Fig. 1 is a fog network. Fog computing is also known as edge computing or fogging. Fog computing facilitates the operation of compute, storage, and networking services between end devices and cloud computing data centers. Some prior art documents describe differences between fog computing and edge computing. However, the present application does not distinguish between the concept of fog computing and edge computing and considers both to be identical at least in the concept of the present invention. Accordingly, any reference to fog computing may be a reference to edge computing, any reference to a fog application may be a reference to an edge application and so on.

The physical system can be an automation system. Any system which interacts with its environment via, for example, sensors or actuators, is considered to be an automation system. Automation systems can comprise a huge number of heterogeneous devices. The devices are sometimes referred as the "things" and the concept of the things being connected with each other and communicating with each other is also referred as the "internet of things".

Fig. 1 shows a plurality of devices which can form an automation system. A fog network, an optional remote service center and a cloud is shown. The fog network may be connected to a cloud. The cloud can provide additional computational resource capacities like memory or CPU capacity. The generated data of the devices can be gathered and transferred to the cloud, where it is analyzed. While the cloud offers ease of scalability the approach of pushing more and more computation from the automation systems into the cloud has limits, and may often not be technically feasible or economically. Huge data transfers generate problems with latency thresholds, available bandwidth and delayed real-time reactions of the automation system.

Devices can have computational resource capacities, for example a CPU capacity, a memory capacity, and/or a bandwidth capacity. The resource capacities of some devices is exemplary illustrated in Fig. 1 showing a pie chart corresponding the device, wherein the full resource capacity is the full circle, free or available resource capacity is the unfilled part of the circle and the resource capacity in use is the filled part of the circle.

Some devices are considered as "smart" devices and some devices are considered as "dumb" devices. Smart devices may host a fog node and/or may provide resource capacities. Some examples for smart devices are industry 4.0 devices, automation machines, robot systems, user interfaces, network devices, routers, switches, gateway devices, servers, and comparable devices. Some devices may not host a fog node or may only have very simple tasks like "read-only" devices or "zero resource capacity" devices. These "dumb" devices, however, can still interact with the fog network although they do not provide resource capacities for other tasks than their primary functions, for example simple sensors, simple actuators or other comparable devices.

Fig. 1 shows a simple example of an automation system for illustrative propose with a small number of devices. However, other automation system may include a much higher number of devices. The automation system can be a factory or an industrial site in general including any number of devices. Devices of the automation system may be heterogeneous and may provide different resource capacities.

The fog network comprises a plurality of fog nodes. The fog network in Fig. 1 is a network of fog nodes, which reside on a number of devices anywhere between the field of devices and the cloud. The fog nodes offer the execution environment for the fog runtime and the foglets. The fog runtime is an administrative application configured to validate foglets.

Moreover, the fog network contains the software allocated and executed on the various components to manage the fog network, and to achieve the functionality as described in the following. The fog network can deploy and run potentially distributed fog applications. Based on an application model, it can decide which application part - so called foglet - should be deployed on which fog node. Thereby it allocates application parts (foglets) so as to adhere to given constraints and to optimize one or multiple objectives as per requirements of the application, as further explained below. Furthermore, the fog network can be able to incorporate fog nodes in a cloud, but it shall not depend on a cloud.

Fog nodes are implemented on devices. A device can host one or more fog nodes. If fog applications run on devices that are shared with non-fog applications, the fog applications shall not interfere with those applications (the so called primary function). Accordingly, a fog node may use a predetermined maximum resource capacity of the hosting device. However, the maximum resource capacity may also be variable in some examples. A fog node may be hosted parallel to the primary functionality of the device. In some embodiments, fog nodes can be hosted on a virtual machine (VM) on the device.

The "fog orchestration" shown in Fig. 1 is a conceptional illustration of basic software components which may be included in the fog network and may run on one or more fog nodes. The software components may include:

A Fog Monitor, which retrieves information on fog nodes and deployed fog applications. The resulting model of the fog network and application allocation may be provided to one or both of the Fog Controller and the Fog Manager;

A Fog Controller including a Fog Allocator, which calculates a mapping of the application's parts (foglets) to fog nodes so that data transfer is minimized. It then deploys the calculated mapping and foglets;

A Fog Manager, which may provide a user interface for selection and configuration of fog applications, allowing a user to deploy/update/remove applications, displays information on fog network and deployed applications. The Fog Manager triggers the according functionality of the Fog Controller upon deploy/update/remove requests by the user.

According to an aspect of the present disclosure, a foglet is a unit of deployment, execution and management in the fog network. Fog applications in general consist of a set of foglets that together form an added value functionality. In other words, a foglet is an application component. A foglet refers to a particular functionality, for example, a module, of an application and how to deploy and execute it, for example, the foglet configuration. Such an application module is the building block for a fog application.

Allocation of foglets may use an allocation algorithm which computes an allocation of foglets to fog nodes based on a concrete application model. The algorithm can for example implement a heuristic or exact linear program solution that targets specific optimization goals, e.g. the minimization of data transfers across network links. Based on models of the application and the fog network onto which the application should be deployed, an allocation algorithm (allocator) computes a mapping of application parts (foglets) to fog nodes. The allocation algorithm thereby can have multiple optimization objectives, for example, it shall minimize the needed network bandwidth, minimize latencies, satisfy network bandwidth constraints and constraints on latencies of data flows, and fulfill specific requirements if indicated in the application model.

A method for adjusting machine learning (ML) models in a system comprising a plurality of devices is suggested. The method comprises: - providing a system comprising a plurality of devices, wherein the devices have computational resource capacities; - providing one or more machine learning (ML) tasks; - providing a repository of ML models for the one or more tasks, wherein a plurality of the ML models of a single task solve the same task with different computational resources requirements and different quality metrics; - selecting one or more devices of the plurality of devices of the system to execute a task, wherein the selected one or more devices have available computational resource capacities; - selecting, from the repository of ML models of the task to be executed, one of the ML models, wherein the computational resources requirements of the selected ML model do not exceed the available computational resource capacities of the selected one or more devices; - deploying the selected ML model to the one or more devices; - execute the selected ML model on the one or more devices. The method is particularly useful for systems with heterogeneous devices.

The suggested method adapts the computational complexity of ML training and inference to the available computational resource capacities of the device by optimizing ML model quality. The method enables a tradeoff between resource usage of the devices and quality of the result by sizing the ML models to the available spare computational resource capacities.

In some examples, devices can have a primary function which uses an amount of computational resources of the device. The available computational resource capacities of the device are spare computational resource capacities which can be used by the execution of the task.

The system may be a distributed control system (DCS) and specifically an automation system as shown in Fig. 1.

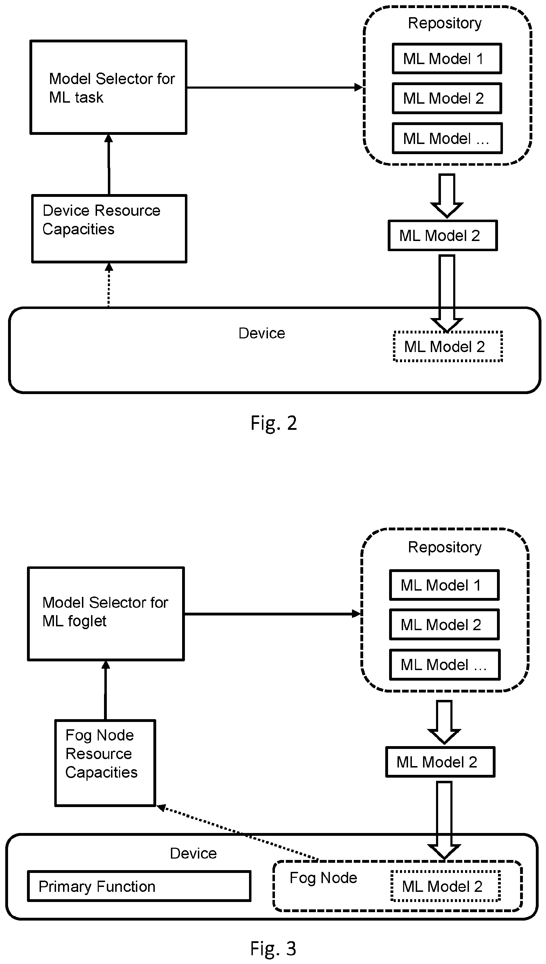

Fig. 2 shows an example of the method with an exemplary device on which an ML model should be executed. The Model Selector has excess to the provided Repository which includes a plurality of ML models. The Model Selector receives the resource capacities of the device and selects one of the ML Models in the Repository. In the example of Fig. 2, ML Model 2 is selected for execution on the device.

According to as aspect, selecting a device of the plurality of devices of the system to execute a task is performed by the (Fog) Allocator. Based on the task and the computational resource capacities of the device, an ML model is selected.

A task may include one or more foglets. The selecting of the one or more devices, the allocation and the deployment of the task (or of the one or more foglets) may be performed by The Fog Controller. In other word, the Fog Controller may include the Allocator and the Model Selector. Accordingly, the Fog Controller receives the information about available computational resource capacities of the selected one or more devices.

Given a task, the Model Selector creates multiple models from the same training data by varying: the underlying machine learning algorithm, or their parameters or both. This will create multiple models all targeting the same task but using different amounts of resources and likely resulting in different inference performance (computational resources requirements and quality metrics) which will be stored, e.g., in a table. The repository of ML models may comprise a plurality of ML models for the same task, an estimation of the computational resources requirements and an estimation for the quality metrics for each ML model.

Selection of the one or more devices and selection of the ML model from the ML model repository may be an iterative process based on an artificial intelligence algorithm, specifically an ML algorithm. In particular, one selection causes the other. The decision may be based on a best case scenario. For example, the system knows that the current task is one of many tasks to be deployed in the system. The Selector may select a low capacity device for the first task and select the ML of the task accordingly. The second task may be allocated and deployed on a high capacity device selecting a ML model which needs a high amount of resources.

The ML models solve the same task with different computational resources requirements and different quality metrics. The plurality of the ML models of a single task may differ in an underlying ML algorithm, a selection of boundary parameters, or both. Specifically, high computational resources requirements are needed to get a better result defined by the quality metrics.

In some examples, the ML model includes a re-training or self-training which improves the pre-trained model. A boundary parameter can include a measure for a complexity of the training, for example, a number of training loops.

Some examples of ML algorithms are random forest algorithm and deep neural network algorithm. A boundary parameter which may be varied in the random forest algorithm is, for example, the number of trees. A boundary parameter which may be varied in a deep neural network algorithm is, for example, the number of hidden layers. More trees or layers lead to a more complex model which would lead to a more accurate result (quality metric). More trees or more layers also lead to more computational resources requirements of the device to execute the ML model. This allows to solve a task on a large variety of heterogeneous devices in a nearly optimal way.

The computational resource requirements may comprise one of a CPU load, a memory usage, or combinations thereof.

According to an aspect, the quality metrics are a measure or an estimation of the error of the result. The quality metrics may comprise one of accuracy, precision, recall, F1 score or combinations thereof. These parameters are well-known parameters to determine errors in statistics. Precision defines false positive and recall defines false negative errors. Accuracy is a weighted arithmetic mean of precision and inverse precision (weighted by bias) as well as a weighted arithmetic mean of recall and inverse recall. The F 1 score is the harmonic mean of the precision and recall, where an F 1 score reaches its best value at 1.

According to an aspect, selecting the ML model includes, selecting the ML model from the repository which has a maximum of the quality metrics. In other words, the maximum of the quality metrics is the best result, for example, best accuracy, an F1 score closest to 1, or in general the smallest error. Selecting the best model, wherein the computational resources requirements of the selected ML model do not exceed the computational resource capacities of the selected device leads to an optimal use of available resources.

In one example, the task is a classification task and the plurality of the ML models include at least one or more ML models based on the random forest algorithm and/or deep neural network algorithm.

According to an aspect of the present disclosure, the resources of the system may change, for example, devices may join or leave the system, maintenance tasks may be hosted or disturbances in the control system may occur. Under such circumstances, the computational resources capacities need to be available for primary system tasks, while ML tasks could be run in a fashion requiring less resources, using the above techniques to save on resource consumption. On the other hand, during steady state operation, ML models can be retrained and improved, and more resources can be used to obtain higher quality results.

The method disclosed herein can automatically adapt to variations of the available computational resources in system without human interaction. For example, an external device or a human may provide a task which can be solved with a ML model. The system using the method as described herein will than calculate different possible ML models, create a repository, and select the best ML model from the repository dependent from the current available resources. There is no decision by a human. However, the system may have certain predetermined rules for the allocation of tasks and selection of devices.

According to an aspect, a single device of the plurality of devices of the system to execute a task is selected as shown in Fig. 2. The available resources of this device are used to select the corresponding executable ML model having the best quality score.

In other examples, multiple devices of the plurality of devices of the system to execute a task are selected. The available resources of these devices are used to select the corresponding executable ML model having the best quality score. Thus, an ML model training task may be run across multiple low-power devices instead of one more powerful device. In a fog network, the task may comprise one or more foglets and each foglet is deployed on one of the devices or on one of the fog nodes, respectively.

According to an aspect of the present disclosure, a fog network comprising a plurality of fog nodes can be implemented on the system, wherein the task comprises one or more foglets and the selection of the one or more devices includes a selection of one or more fog nodes implemented on the one or more devices. The fog network may be a fog network as shown in Fig. 1.

A system is also suggested according to the present disclosure. The system comprises a plurality of devices, wherein the system is configured to perform the method of as disclosed herein. Specifically, the system can be an automation system and, additionally, a fog network can be implemented on the system.

A method for adjusting machine learning (ML) models in a fog network is suggested. Fig. 3 shows an example of the method with an exemplary device hosting a fog node on which an ML model should be executed. The method comprises: - providing a fog network with a plurality of fog nodes, each fog node has computational resource capacities; - providing one or more machine learning ML tasks; - providing a repository of ML models for each task, wherein a plurality of the ML models of a single task solve the same task with different computational resources requirements and different quality metrics; - selecting one or more fog nodes of the plurality of fog nodes of the fog network to execute a task, wherein the selected one or more fog nodes have available computational resource capacities; - selecting, from the repository of ML models of the task to be executed, one of the ML models, wherein the computational resources requirements of the ML model do not exceed the available computational resource capacities of the selected one or more fog nodes; - deploying the selected ML model to the one or more fog nodes; - execute the selected ML model on the one or more fog nodes.

Devices may have a primary function which is separated from the fog node and may have a reserved amount of computational resource capacity of the device. In some examples, a fog node has a reserved and fixed computational resource capacity of its corresponding device. In some other examples, the computational resource capacity available for the fog node may be adaptable.

According to an aspect, a device can host one or more fog nodes. A fog node can be hosted by a single device.

The fog network can be implemented in some examples on an automation system comprising a plurality of automation devices, wherein one or more devices of the plurality of automation devices operates the plurality of fog nodes. One example of such an automation system is shown in Fig. 1.

## Claims

1. A method for adjusting machine learning (ML) models in a system comprising a plurality of devices, the method comprising:
- providing a system comprising a plurality of devices, wherein the devices have computational resource capacities;
- providing one or more machine learning ML tasks;
- providing a repository of ML models for the one or more tasks, wherein a plurality of the ML models of a single task solve the same task with different computational resources requirements and different quality metrics;
- selecting one or more devices of the plurality of devices of the system to execute a task, wherein the selected one or more devices have available computational resource capacities;
- selecting, from the repository of ML models of the task to be executed, one of the ML models, wherein the computational resources requirements of the selected ML model do not exceed the available computational resource capacities of the selected one or more devices;
- deploying the selected ML model to the one or more devices;
- execute the selected ML model on the one or more devices.

2. The method of claim 1, wherein the plurality of the ML models of a single task differ in an underlying ML algorithm, a selection of boundary parameters, or both.

3. The method of any of the preceding claims, wherein the resource requirements comprise one of a CPU load, a memory usage, or combinations thereof.

4. The method of any of the preceding claims, wherein the quality metrics comprise one of accuracy, precision, recall, F1 score or combinations thereof.

5. The method of any of the preceding claims, wherein selecting the ML model includes, selecting the ML model from the repository which has a maximum of the quality metrics.

6. The method of any of the preceding claims, wherein a fog network comprising a plurality of fog nodes is implemented on the system, wherein the task comprises one or more foglets and wherein the selection of the one or more devices includes a selection of the one or more fog nodes implemented on the one or more devices.

7. The method of any of the preceding claims, wherein the task is a classification task and the plurality of the ML models include at least one or more ML models based on the random forest algorithm and/or deep neural network algorithm.

8. A system comprising a plurality of devices, wherein the system is configured to perform the method of any of the preceding claims.

9. A method for adjusting machine learning (ML) models in a fog network, the method comprising:
- providing a fog network with a plurality of fog nodes, each fog node has computational resource capacities;
- providing one or more machine learning ML tasks;
- providing a repository of ML models for each task, wherein a plurality of the ML models of a single task solve the same task with different computational resources requirements and different quality metrics;
- selecting one or more fog nodes of the plurality of fog nodes of the fog network to execute a task, wherein the selected one or more fog nodes have available computational resource capacities;
- selecting, from the repository of ML models of the task to be executed, one of the ML models, wherein the computational resources requirements of the ML model do not exceed the available computational resource capacities of the selected one or more fog nodes;
- deploying the selected ML model to the one or more fog nodes;
- execute the selected ML model on the one or more fog nodes.

10. The method of claim 9, wherein the plurality of the ML models of a single task differ in an underlying ML algorithm, a selection of boundary parameters, or both.

11. The method of any of the claims 9 or 10, wherein the resource requirements comprise one of a CPU load, a memory usage, or combinations thereof.

12. The method of any of the claims 9 to 11, wherein the quality metrics comprise one of accuracy, precision, recall, F1 score or combinations thereof.

13. The method of any of the claims 9 to 12, wherein selecting the ML model includes, selecting the ML model from the repository which has a maximum of the quality metrics.

14. The method of any of the claims 9 to 13, wherein the fog network is implemented on an automation system comprising a plurality of automation devices, wherein one or more devices of the plurality of automation devices operates the plurality of fog nodes.

15. A system comprising a plurality of devices, wherein the system is configured to perform the method of any of the claims 9 to 14.
